Europäisches Patentamt

European Patent Office

Office européen des brevets

(19)

(11) Veröffentlichungsnummer : **0 151 302**
**B1**

(12) **EUROPÄISCHE PATENTSCHRIFT**

(45) Veröffentlichungstag der Patentschrift :
28.03.90

(21) Anmeldenummer : 84115937.9

(22) Anmeldetag : 20.12.84

(51) Int. Cl.⁵ : **F 16 J 15/14**, F 16 J 15/12,
C 09 K   3/10

(54) **Weichstoffflachdichtung, insbesondere Zylinderkopfdichtung.**

(30) Priorität : 04.02.84 DE 3403908

(43) Veröffentlichungstag der Anmeldung :
14.08.85 Patentblatt 85/33

(45) Bekanntmachung des Hinweises auf die Patenterteilung : 28.03.90 Patentblatt 90/13

(84) Benannte Vertragsstaaten :
FR GB IT SE

(56) Entgegenhaltungen :
DE--A-- 2 730 588
DE--C--   567 092
DE--C-- 2 914 173
US--A-- 3 915 906
PATENT ABSTRACTS OF JAPAN, Band 5, Nr. 45 (C-
48)[717], 25.03.1981; & JP - A - 55 165 976 (SANWA
PACKING KOGYO) 24.12.1980
DEB-R7828 XII/47F (REINZ DICHTUNGS-GESELLS-
CHAFT)

(73) Patentinhaber : GOETZE AG
Bürgermeister-Schmidt-Strasse 17
D-5093 Burscheid 1 (DE)

(72) Erfinder : Zerfass, Hans-Rainer, Dr.
Finkenweg 8
D-5093 Burscheid (DE)
Erfinder : Bechen, Heribert, Dipl.-Ing.
Wichheimer Strasse 305
D-5000 Köln 80 (DE)
Erfinder : Giesen, Franz-Josef
Am Alten Turm 1 a
D-5068 Odenthal 3 (DE)

**Beschreibung**

Die Erfindung betrifft eine Weichstoffflachdichtung, wie insbesondere eine Zylinderkopfdichtung für Verbrennungskraftmaschinen, aus einem gegebenenfalls metallisch verstärkten Faservlies mit Fasern organischen und/oder anorganischen, synthetischen und/oder natürlichen Ursprunges mit einem Bindemittel vorzugsweise auf der Basis eines Latex und einer Füllung aus pulverförmigem bis feinkörnigem, nicht faserigem Material, welches im Faservlies gleichmäßig verteilt ist.

Nach beispielsweise der DE-B-R-7828 XII/47f sind Weichstoffzylinderkopfdichtungen für Verbrennungskraftmaschinen bekannt, die aus metallisch verstärkten Faservliesplatten mit Füllstoffanteilen an pulverförmigem bis feinkörnigem, nicht faserigem, mineralischem Material bestehen. Die Herstellung der Faservliese erfolgt bevorzugt im Papierherstellungsverfahren aus Aufschlämmungen von Faserdispersionen mit Zusätzen an Latexbindemitteln und den Füllstoffen, wobei inzwischen die ursprünglich verwendeten Asbestfasern heute vielfach schon durch Nichtasbestfasern organischen und/oder anorganischen, natürlichen und/oder synthetischen Ursprunges ersetzt sind. So besteht beispielsweise das asbestfreie Faservlies der DE-C-29 14 173 aus Gemischen von zur Blattbildung geeigneter pflanzlicher Faser mit Synthesefasern, und nach der DE-A-27 30 588 sind Faservliese aus pflanzlichen Fasern und nicht bindenden, mineralischen, feinen und nicht faserigen Füllstoffen bekannt.

Asbestfreie Faservliese mit derart hohen Anteilen an pflanzlichen Fasern sind aber weniger temperaturbeständig, so daß sie nur bedingt in den hoch beanspruchten Zylinderkopfdichtungen einsetzbar sind. Zum Ausgleich dieser Nachteile setzt man nach der DE-A-29 14 173 die pflanzlichen Fasern im Gemisch mit hoch beanspruchbaren speziellen Synthesefasern auf der Basis von Polyaramiden ein. Solche Spezialfasern sind allerdings relativ teuer, so daß die damit hergestellten Zylinderkopfdichtungen letztlich zu kostspielig werden.

Vor allem die Festigkeitswerte, das Abdichtungsverhalten und die Beständigkeitswerte der beispielsweise aus der DE-B-R-7829 XII/47f vorbekannten Faservliese sind noch nicht so gut, daß diese Faservliese als Zylinderkopfdichtungen in hoch belasteten, modernen Verbrennungskraftmaschinen eingesetzt werden können. Deshalb werden beispielsweise nach der DE-B-23 04 505 die fertig eingefaßten Zylinderkopfdichtugnen durch bevorzugt Tauchen mit lösungsmittelfreien und vernetzbaren Flüssigkeiten imprägniert, und die Imprägniermittel werden anschließend in der Dichtung bevorzugt thermisch vernetzt.

Vor allem beim Tauchimprägnieren können jedoch die Imprägniermittel unter Umständen nur unvollständig in den Weichstoff eindringen, und es entstehen Oberflächenbereiche mit höheren Imprägniermittelanteilen und Kernbereiche mit geringeren Imprägniermittelanteilen, so daß die Impragniermittelverteilung, über den Querschnitt gesehen, ungleichmäßig ist. Derartige Dichtungen sind dann in bestimmten Anwendungsfällen nicht mehr einsetzbar. Zur Abhilfe kann man zwar darauf achten, daß die Viskosität der Imprägniermittelbäder immer konstant ist, da die Bäder jedoch im Betrieb oft über Monate im Einsatz sind und dabei ihre Viskosität durch Vernetzungsvorgänge langsam verändern, ist die genaue Einstellung der Werte in der Praxis oft schwierig. Darüberhinaus erfordert das Tauchimprägnieren der fertig eingefaßten Zylinderkopfdichtungen weitere Verfahrensschritte, die die Herstellungskosten der Dichtung insgesamt verteuern.

Der vorliegenden Erfindung liegt die Aufgabe zugrunde, eine imprägnierte Weichstoffflachdichtung, insbesondere eine Zylinderkopfdichtung, zu schaffen, in deren Faservlies das Imprägniermittel möglichst gleichmäßig verteilt ist, und welche nach einem einfachen Verfahren möglichst ohne besondere Verfahrensschritte herstellbar ist. In asbestfreien Dichtungen soll die Imprägnation vor allem deren Beständigkeitswerte so weit verbessern, daß auf den Einsatz von teuren Spezialfasern im Faservlies möglichst vollständig verzichtet werden kann.

Erfindungsgemäß wird diese Aufgabe durch eine Weichstoffflachdichtung mit einer Füllung aus pulverförmigem bis feinkörnigem, nicht faserigem Material gelöst, welches aus einem reaktiven Kunstharz besteht, und welches in der einbaufertigen Dichtung nach einem der bekannten Herstellungsverfahren zu einem vorvernetzten Zustand ausgehärtet ist. Der verwendete Füllstoff besteht bevorzugt aus einem feinen wasserunlöslichen Phenolharz, welches in der einbaufertigen Dichtung zu etwa 40 bis 70 % vorvernetzt ist, so daß die Endvernetzung des Füllstoffes nach dem Einbau der Dichtung bei der Betriebshitze des Motors erfolgen kann. Der Gewichtsanteil der reaktiven Füllstoffe liegt bevorzugt zwischen 5 und 20 %, und die Porenfüllung beträgt bevorzugt zwischen 70 % und 90 %. Die einbaufertige Dichtung kann zusätzlich, wie an und für sich bei Dichtungen bekannt, mit ein- oder beidseitigen ganzflächigen Überzügen und/oder partiellen Auflagen aus polymerem Material zur Erhöhung der Anpassung an die Dichtflächen beziehungsweise zur partiellen Dichtpressungserhöhung versehen sein.

Zur Herstellung der erfindungsgemäßen Faservliese nach einem der bekannten Papierherstellungsverfahren werden die reaktiven Füllstoffe jetzt den Aufschlämmungen der Faser- und Latexgemische direkt hinzugegeben, so daß nach dem Absieben der Faservliesplatte der reaktive Füllstoff im Faservlies, auch über den Querschnitt gesehen, vollständig gleichmäßig verteilt ist. Anschließend erfolgt nach dem Trocknen des Faservlieses bevorzugt thermisch die Vorvernetzung des reaktiven Füllstoffes unter definierter Energiezufuhr auf den gewünschten Vernetzungsgrad.

Dabei erfolgt eine Quellung des Füllstoffes unter Ausfüllung der freien Poren im Fasen lies mit der gewünschten Porenfüllung. Die optimale Energiezufuhr muß dabei, abgestimmt auf den jeweiligen Anwendungsfall, ermittelt werden. Die Weiterverarbeitung der Faservliese zu einbaufertigen Dichtungsplatten erfolgt dann in der bekannten Weise.

Durch die Erfindung ist eine Dichtungsplatte entstanden, deren reaktiver Füllstoff wie eine Imprägnierung wirkt, die vor allem die Festigkeitswerte, die Beständigkeitswerte und die Abdichtgüte der Dichtung verbessert. Durch Einbringung des Füllstoffes in das Faservlies schon bei dessen Herstellung in der wässrigen Aufschlämmung ist der Füllstoff optimal gleichmäßig in der Faservliesplatte verteilt, so daß die Dichtungen unbedenklich auch in schwierigen Anwendungsfällen eingesetzt werden können. Das Herstellungsverfahren der Dichtungen erfordert keine zusätzlichen Verfahrensschritte, so daß die Dichtungen kostengünstiger als die bisherigen, konventionell imprägnierten Dichtungen hergestellt werden können. Der in der Flachdichtungsplatte verwendete Füllstoff gewährleistet einmal die optimale Anpassung der Dichtung nach dem Einbau an die abzudichtenden Dichtflächen, zum anderen aber ist die Dichtungsplatte durch den lediglich vorvernetzten Füllstoff noch so weich, daß aus ihnen problemlos die Konturen der einbaufertigen Dichtungen ausgestanzt werden können.

Gefunden wurde ferner, daß offensichtlich wegen der sehr gleichmäßigen Verteilung des Füllstoffes im Faservlies vor allem deren Temperaturbeständigkeitswerte so weit verbessert sind, daß asbeatfreie Dichtungen mit Faservliesen ohne Anteile an teuren und besonders beanspruchbaren Spezialfasern (Aramid) als Zylinderkopfdichtungen ohne Einschränkung einsetzbar sind. Die erfindungsgemäß mit Kunstharz gefüllten Weichstoffflachdichtungen sind somit wesentlich kostengünstiger herstellbar.

Während die erfindungsgemäßen Dichtungen bevorzugt als Zylinderkopfdichtungen in Verbrennungskraftmaschinen eingesetzt werden sollen, ist es jedoch auch möglich, diese an Dichtstellen mit ähnlicher Belastung wie in Auspuffflanschverbindungen einzusetzen. Ebenso können als Füllstoffe außer reaktiven Phenolharzen auch andere reaktive Kunstharze wie Epoxidharz, ungesättigte Polyesterharze, Polyamidharze oder Polyimidharze verwendet werden. Die asbestfreien Dichtungen können als Fasermaterial außer vor allem pflanzlichen Fasern auch kostengünstige anorganische Fasern wie Steinwolle, Glaswolle oder Schlackenwolle oder kostengünstige organische Synthesefasern aus beispielsweise normalen Polyamiden, Polyestern oder Polyacrylnitril einzeln oder im Gemisch enthalten.

In einem Ausführungsbeispiel wurde ein asbestfreies Faservliesplattenmaterial nach einem Papierherstellungsverfahren mit 40 Gewichtsteilen Steinwolle (Faserlänge 1,4 mm), 60 Gewichtsteilen Baumwolle (Faserlänge 2,8 mm), 12 Gewichtsteilen Acrylnitrilkautschuklatex (Trockengewicht) und 15 Gewichtsteilen feinkörnigem und festem Phenolharz hergestellt. Nach dem Vorvernetzen des reaktiven Füllstoffes zu 50 % Vernetzung im Ofen über 5 Minuten bei 140 °C wurden die Platten auf eine Dicke von 5 mm gewalzt, so daß die Faservliese eine Porenfüllung an Füllstoff von 75 besaßen.

Aus diesen Faservliesplatten wurden Zylinderkopfdichtungen wie üblich hergestellt, und das Funktionsverhalten dieser Dichtungen wurde getestet.

Die Dichtungen zeigten ein gutes Verformungsverhalten, eine hervorragende Beständigkeit gegenüber den abzudichtenden Medien, eine Temperaturbeständigkeit von über 250 °C, geringe Klebeneigung und ein gutes Alterungsverhalten. Sie entsprachen somit in ihren Werten den asbesthaltigen Zylinderkopfdichtungen mit einer konventionellen Imprägnierung.

## Patentansprüche

1. Weichstoffflachdichtung, insbesondere Zylinderkopfdichtung für Verbrennungskraftmaschinen, bestehend aus einem gegebenenfalls metallisch verstärkten Faaervlies aus Fasern organischen und/oder anorganischen, synthetischen und/oder natürlichen Ursprunges mit einem Bindemittel vorzugsweise auf der Basis von Latex und einer Füllung aus pulverförmigem bis feinkörnigem, nicht faserigem Material, welches im Faservlies fein verteilt ist, dadurch gekennzeichnet, daß das pulverförmige bis feinkörnige, nicht faserige Material aus einem reaktiven Kunstharz besteht, welches in der einbaufertigen Dichtung nach einem der bekannten Härtungsverfahren zu einem vorvernetzten Zustand ausgehärtet ist.

2. Weichstoffflachdichtung nach Anspruch 1, dadurch gekennzeichnet, daß das Faservlies 5 bis 20 Gewichtsprozent an reaktiven Füllstoffen enthält.

3. Weichstoffflachdichtung nach den Ansprüchen 1 und 2, dadurch gekennzeichnet, daß die Poren des Faservlieses zu 70 bis 90 % mit reaktivem Füllstoff gefüllt sind.

4. Weichstoffflachdichtung nach mindestens einem der Ansprüche 1 bis 3, dadurch gekennzeichnet, daß der reaktive Füllstoff aus Kunstharz in der einbaufertigen Dichtung zu 40 bis 70 % vorvernetzt ist.

5. Weichstoffflachdichtung nach mindestens einem der Ansprüche 1 bis 4, dadurch gekennzeichnet, daß als reaktiver Füllstoff ein reaktives, feines und wasserunlösliches Phenolharz verwendet ist.

6. Weichstoffflachdichtung nach mindestens einem der Ansprüche 1 bis 5, dadurch gekennzeichnet, daß die Faservliese asbestfrei sind.

7. Verfahren zur Herstellung der Faservliese für die Weichstoffflachdichtungen nach mindestens einem der Ansprüche 1 bis 6, dadurch gekennzeichnet, daß die Faservliese aus wässrigen und homogenen Aufschlämmungen mit Fasermaterial, Latexbindemittel und pulverförmigem bis feinkörnigem, nicht faserigem, reaktivem Kunstharz nach einem Papierherstellungsverfahren gefertigt werden.

## Claims

1. Flat gasket of soft material, especially a cylinder head gasket for internal combustion engines, consisting of a fibre fleece, reinforced if desired with metal, of organic and/or inorganic fibres of synthetic and/or natural origin, with a binder preferably based on latex and a filling of powdered to fine-grained non-fibrous material, which is finely distributed in the fibrous fleece, characterized in that the powdered to fine-grained non-fibrous material consists of a reactive synthetic resin which is hardened to a pre-cross-linked state in the ready-to-fit gasket according to one of the known hardening methods.

2. Flat gasket of soft material according to claim 1, characterized in that the fibrous fleece contains 5 to 20 percent by weight of the reactive filler.

3. Flat gasket of soft material according to claims 1 and 2, characterized in that the pores of the fibrous fleece are filled to 70 to 90 % with reactive filler.

4. Flat gasket of soft material according to at least one of claims 1 to 3, characterized in that the reactive filler of synthetic resin is pre-cross-linked to 40 to 70 % in the ready-to-fit gasket.

5. Flat gasket of soft material according to at least one of claims 1 to 4, characterized in that a reactive, refined and water insoluble phenol resin is used a reactive filler.

6. Flat gasket of soft material according to at least one of claims 1 to 5, characterized in that the fibrous fleece is asbestos-free.

7. Method of making the fibrous fleece for the flat gasket of soft material according to at least one of claims 1 to 6, characterized in that the fibrous fleece is prepared according to a papermaking method from aqueous and homogeneous slurries with fibrous material, latex binder and powdered to fine-grained, non-fibrous, reactive synthetic resin.

## Revendications

1. Joint plat en matière molle, en particulier joint de culasse pour machines à combustion interne, constitué d'un non-tissé, le cas échéant renforcé métalliquement, composé de fibres d'origine organique et/ou non-organique, synthétique et/ou naturelle avec un liant de préférence à base de latex et d'une charge en matériau non fibreux sous forme de poudre jusqu'en grains fins qui est finement répartie dans le non-tissé, caractérisé en ce que le matériau non fibreux sous forme de poudre jusqu'en grains fins est constitué d'une résine synthétique réactive qui est durcie jusqu'à un état de préréticulation dans le joint prêt à être monté selon un procédé connu de durcissement.

2. Joint plat en matière molle selon la revendication 1, caractérisé en ce que le non-tissé contient de 5 à 20 % en poids de charges réactives.

3. Joint plat en matière molle selon la revendication 1 ou la revendication 2, caractérisé en ce que les pores du non-tissé sont remplis de 70 à 90 % de charges réactives.

4. Joint plat en matière molle selon au moins une des revendications 1 à 3, caractérisé en ce que la charge réactive en résine synthétique est préréticulée dans le joint prêt à être monté de 40 à 70 %.

5. Joint plat en matière molle selon au moins une des revendications 1 à 4, caractérisé en ce qu'une résine phénoplaste insoluble dans l'eau, fine et réactive est utilisée en tant que charge réactive.

6. Joint plat en matière molle selon au moins une des revendications 1 à 5, caractérisé en ce que les non-tissés ne contiennent pas d'aminate.

7. Procédé de fabrication des non-tissés pour les joints plats en matière molle selon au moins une des revendications 1 à 6, caractérisé en ce que les non-tissés sont réalisés selon un procédé de fabrication du papier à partir des suspensions aqueuses et homogènes avec du matériau fibreux, du liant de latex et de la résine synthétique réactive, non fibreuse sous forme de poudre jusqu'en grains fins.